# EUROPEAN PATENT APPLICATION

(11) **EP 3 725 574 A1**
(43) Date of publication of application: **21.10.2020**
(21) Application number: 18888485.2
(22) Date of filing: 12.12.2018
(51) Int. Cl.: B60H 1/00, B60R 16/037

(54) **METHOD AND SYSTEM FOR CONTROLLING COMFORT OF IN-VEHICLE ENVIRONMENT, AND VEHICLE, CONTROLLER AND STORAGE MEDIUM**

(30) Priority: 15.12.2017 CN 201711346031; 23.02.2018 CN 201810154788
(71) Applicant: Nio Nextev Limited, Hong Kong (CN)
(72) Inventor: DONG, Yiwei, Hong Kong (CN); FAN, Xin, Hong Kong (CN); FU, Litao, Hong Kong (CN); WANG, Xueshi, Hong Kong (CN)
(74) Representative: Vossius & Partner Patentanwälte Rechtsanwälte mbB
(86) International application number: PCT/CN2018/120555
(87) International publication number: WO 2019/114750

(57) **Abstract**

Disclosed are a method and system for controlling the comfort of an in-vehicle environment. The method comprises: receiving a request that is sent by a user to start controlling the comfort of an in-vehicle environment; detecting the current temperature of the in-vehicle environment; querying historical storage data set by the user regarding the temperature of the in-vehicle environment, so as to acquire the latest temperature value of the in-vehicle environment set by the user and calculate a difference between the latest temperature value and the detected current temperature of the in-vehicle environment; making a determination according to the difference and performing the following operation: if the difference is a positive number and is greater than a first preset value, determining that the current temperature of the in-vehicle environment is low and the comfort of the in-vehicle environment needs to be controlled, and thus activating a vehicle heating system for increasing the temperature of the in-vehicle environment; or if the difference is a negative number and is less than a second preset value, determining that the current temperature of the in-vehicle environment is high and needs to be controlled for the comfort of the in-vehicle environment, and thus activating a vehicle cooling system for reducing the temperature of the in-vehicle environment. This solution may enable the user to conveniently and quickly start the operation of controlling the comfort of the in-vehicle environment with one button, thereby improving the in-vehicle environment efficiently and quickly.

## Description

### Technical Field

The invention relates to the technical field of automobiles, and in particular to a method for controlling the comfort of an in-vehicle environment, a system for controlling the comfort of an in-vehicle environment, a vehicle, a controller and a storage medium.

### Background Art

With the progress of society, people's requirements for vehicle driving comfort and other aspects are increasing day by day. However, the reality is that there are still some disadvantages and deficiencies in these aspects, which are not satisfactory. For example, it often needs to take a lot of time to control the comfort of vehicle air conditioners, seats or steering wheels in traditional vehicles, and many complicated operation steps need to be performed, thereby resulting in that it is not only difficult for users to find the functions they need most among many control devices, but also it is difficult to realize all the controls quickly. In addition, after functions such as seat heating or ventilation are activated, the users need to deactivate them later, which brings potential safety hazards, and thus will adversely affect the driving safety. As a result, the vehicle and the personal safety may be jeopardized. Therefore, it is necessary to carry out adequate studies on the existing problems or defects comprising those mentioned above, in order to make an improvement.

### Summary of the Invention

In view of this, the invention provides a method for controlling the comfort of an in-vehicle environment, a system for controlling the comfort of an in-vehicle environment, a vehicle, a controller and a storage medium, such that it is possible to effectively solve or at least alleviate the above and others problems existing in the prior art.

First, according to a first aspect of the present invention, provided is a method for controlling the comfort of an in-vehicle environment. The method comprises:
receiving a request that is sent by a user to start controlling the comfort of an in-vehicle environment;
detecting the current temperature of the in-vehicle environment;
querying historical storage data set by the user regarding the temperature of the in-vehicle environment, so as to acquire the latest temperature value of the in-vehicle environment set by the user and calculate a difference between the latest temperature value and the detected current temperature of the in-vehicle environment; and
making a determination according to the difference and performing the following operation:
   if the difference is a positive number and is greater than a first preset value, determining that the current temperature of the in-vehicle environment is low and the comfort of the in-vehicle environment needs to be controlled, and thus activating a vehicle heating system for increasing the temperature of the in-vehicle environment; or
   if the difference is a negative number and is less than a second preset value, determining that the current temperature of the in-vehicle environment is high and needs to be controlled for the comfort of the in-vehicle environment, and thus activating a vehicle cooling system for reducing the temperature of the in-vehicle environment, wherein the second preset value is a negative number and the absolute value thereof is equal to or not equal to the absolute value of the first preset value.

In the method for controlling the comfort of an in-vehicle environment according to the invention, optionally, the vehicle heating system operates for a first preset time period after being activated, to increase the temperature of the in-vehicle environment, and at least a part of the vehicle heating system is then deactivated; and/or
the vehicle cooling system operates for a second preset time period after being activated, to reduce the temperature of the in-vehicle environment, and at least a part of the vehicle cooling system is then deactivated, wherein the second preset time period is equal to or not equal to the first preset time period.

In the method for controlling the comfort of an in-vehicle environment according to the invention, optionally, the vehicle heating system comprises a heating module and a blower of a vehicle air conditioner, a seat heating module, and a steering wheel heating module, and the temperature of the in-vehicle environment is increased by activating at least one of the heating module and the blower of the vehicle air conditioner, the seat heating module and the steering wheel heating module; and/or
the vehicle cooling system comprises a refrigeration module and the blower of the vehicle air conditioner, a seat ventilation module, and the temperature of the in-vehicle environment is reduced by activating at least one of the refrigeration module and the blower of the vehicle air conditioner, and the seat ventilation module.

In the method for controlling the comfort of an in-vehicle environment according to the invention, optionally, the heating module of the vehicle air conditioner is provided with a maximum power setting and a minimum power setting, or with a maximum power setting, a minimum power setting and one or more intermediate power settings therebetween, the blower is provided with a maximum air volume setting and a minimum air volume setting, or with a maximum air volume setting, a minimum air volume setting and one or more intermediate air volume settings therebetween, the heating module of the vehicle air conditioner operates at the maximum power setting or at one of the intermediate power settings when being activated, and the blower operates at the maximum air volume setting or at one of the intermediate air volume settings when being activated; and/or
the refrigeration module of the vehicle air conditioner is provided with a maximum power setting and a minimum power setting, or with a maximum power setting, a minimum power setting and one or more intermediate power settings therebetween, the blower is provided with a maximum air volume setting and a minimum air volume setting, or with a maximum air volume setting, a minimum air volume setting and one or more intermediate air volume settings therebetween, the refrigeration module of the vehicle air conditioner operates at the maximum power setting or at one of the intermediate power settings when being activated, and the blower operates at the maximum air volume setting or at one of the intermediate air volume settings when being activated.

In the method for controlling the comfort of an in-vehicle environment according to the invention, optionally, when the vehicle air conditioner is activated, an air outlet mode of the vehicle air conditioner is configured such that an air outlet of the air conditioner is directed in a direction such that the somatosensory temperature of the user is changed, and the air outlet mode comprises a face blowing mode, a foot blowing mode, and a face and foot blowing mode.

In the method for controlling the comfort of an in-vehicle environment according to the invention, optionally, the user sends the request to start controlling the comfort of the in-vehicle environment by means of a one-button operation.

Second, according to a second aspect of the present invention, provided is a system for controlling the comfort of an in-vehicle environment. The system comprises:
a receiving module for receiving a request that is sent by a user to start controlling the comfort of an in-vehicle environment;
a detection module for detecting the current temperature of the in-vehicle environment;
a control module, which is connected to the receiving module and the detection module, and is configured to perform the following steps:
   querying historical storage data set by the user regarding the temperature of the in-vehicle environment after the request to start controlling the comfort of the in-vehicle environment is received from the receiving module, so as to acquire the latest temperature value of the in-vehicle environment set by the user and calculate a difference between the latest temperature value and the current temperature of the in-vehicle environment obtained from the detection module; and
   making a determination according to the difference and performing the following operation:
      if the difference is a positive number and is greater than a first preset value, determining that the current temperature of the in-vehicle environment is low and the comfort of the in-vehicle environment needs to be controlled, and thus activating a vehicle heating system for increasing the temperature of the in-vehicle environment; or
      if the difference is a negative number and is less than a second preset value, determining that the current temperature of the in-vehicle environment is high and needs to be controlled for the comfort of the in-vehicle environment, and thus activating a vehicle cooling system for reducing the temperature of the in-vehicle environment, wherein the second preset value is a negative number and the absolute value thereof is equal to or not equal to the absolute value of the first preset value.

In the system for controlling the comfort of an in-vehicle environment according to the invention, optionally, the control system is further configured to perform the following steps: the vehicle heating system operates for a first preset time period after being activated, to increase the temperature of the in-vehicle environment, and at least a part of the vehicle heating system is then deactivated; and/or
the vehicle cooling system operates for a second preset time period after being activated, to reduce the temperature of the in-vehicle environment, and at least a part of the vehicle cooling system is then deactivated, wherein the second preset time period is equal to or not equal to the first preset time period.

In the system for controlling the comfort of an in-vehicle environment according to the invention, optionally, the vehicle heating system comprises a heating module and a blower of a vehicle air conditioner, a seat heating module, and a steering wheel heating module, and the control system is configured to increase the temperature of the in-vehicle environment by activating at least one of the heating module and the blower of the vehicle air conditioner, the seat heating module and the steering wheel heating module; and/or
the vehicle cooling system comprises a refrigeration module and the blower of the vehicle air conditioner, a seat ventilation module, and the control system is configured to reduce the temperature of the in-vehicle environment by activating at least one of the refrigeration module and the blower of the vehicle air conditioner, and the seat ventilation module.

In the system for controlling the comfort of an in-vehicle environment according to the invention, optionally, the heating module of the vehicle air conditioner is provided with a maximum power setting and a minimum power setting, or with a maximum power setting, a minimum power setting and one or more intermediate power settings therebetween, the blower is provided with a maximum air volume setting and a minimum air volume setting, or with a maximum air volume setting, a minimum air volume setting and one or more intermediate air volume settings therebetween, and the control system is configured such that the heating module of the vehicle air conditioner operates at the maximum power setting or at one of the intermediate power settings when being activated, and that the blower operates at the maximum air volume setting or at one of the intermediate air volume settings when being activated; and/or
the refrigeration module of the vehicle air conditioner is provided with a maximum power setting and a minimum power setting, or with a maximum power setting, a minimum power setting and one or more intermediate power settings therebetween, the blower is provided with a maximum air volume setting and a minimum air volume setting, or with a maximum air volume setting, a minimum air volume setting and one or more intermediate air volume settings therebetween, and the control system is configured such that the refrigeration module of the vehicle air conditioner operates at the maximum power setting or at one of the intermediate power settings when being activated, and that the blower operates at the maximum air volume setting or at one of the intermediate air volume settings when being activated.

In the system for controlling the comfort of an in-vehicle environment according to the invention, optionally, the control system is configured such that, when the vehicle air conditioner is activated, an air outlet mode of the vehicle air conditioner is configured such that an air outlet of the air conditioner is directed in a direction such that the somatosensory temperature of the user is changed, and the air outlet mode comprises a face blowing mode, a foot blowing mode, and a face and foot blowing mode.

In the system for controlling the comfort of an in-vehicle environment according to the invention, optionally, the receiving module is provided in a vehicle for the user to send the request to start controlling the comfort of the in-vehicle environment by means of a one-button operation.

In the system for controlling the comfort of an in-vehicle environment according to the invention, optionally, the control module is a central control unit (CCU), and the receiving module is a touch screen or a button.

In addition, according to a third aspect of the present invention, further provided is a vehicle, which is provided with any system for controlling the comfort of an in-vehicle environment as described above.

Furthermore, according to a fourth aspect of the present invention, also provided is a controller comprising a processor and a memory for storing instructions, wherein when the instructions are executed, the processor implements any method for controlling the comfort of an in-vehicle environment as described above.

In addition, according to a fifth aspect of the invention, further provided is a storage medium for storing instructions that, wherein the instructions, when being executed, implement any method for controlling the comfort of an in-vehicle environment as described above.

The invention innovatively provides strategies for controlling the comfort of an in-vehicle environment, such that it is possible to make intelligent determinations based on the current temperature of the in-vehicle environment and choose to jointly activate the functions such as vehicle air conditioning, seat heating or ventilation, steering wheel heating, etc., and all or some of these functions can be automatically deactivated after a certain time. The use of the solutions of the invention may enable the user to very conveniently and quickly start the operation of controlling the comfort of the in-vehicle environment with one button, thereby not only improving the in-vehicle environment efficiently and quickly, but also avoiding driving safety hazards possibly caused by the subsequent manual operations of the user, so that the safety performance of the vehicle can be effectively improved.

### Brief Description of the Drawings

The technical solution of the invention will be further described in detail below with reference to accompanying drawings and embodiments. However, it should be understood that these accompanying drawings are designed for the purpose of illustration only and therefore are not intended to limit the scope of the invention. In addition, unless otherwise specified, these accompanying drawings are intended to be merely conceptually illustrative of the structural configurations described herein, and are not necessarily drawn to scale.
Fig. 1 is a flow block diagram of an embodiment of a method for controlling the comfort of an in-vehicle environment according to the invention.
Fig. 2 is a schematic diagram of the basic composition of an embodiment of a system for controlling the comfort of an in-vehicle environment according to the invention, in which a vehicle heating system and a vehicle cooling system are shown simultaneously.

### Detailed Description of Embodiments

First, it should be noted that the steps, structural composition, characteristics and advantages, etc., of a method for controlling the comfort of an in-vehicle environment, a system for controlling the comfort of an in-vehicle environment, a vehicle, a controller and a storage medium of the invention will be specifically described by way of example; however, all the descriptions are merely illustrative and should not be understood to form any limitation to the invention. In addition, with respect to any single technical feature described or implied in the embodiments described herein, or any single technical feature shown or implied in the drawings, the invention further allows for any combination or deletion of these technical features (or equivalents thereof) to be made, to obtain still other additional embodiments of the invention which may not be directly mentioned herein.

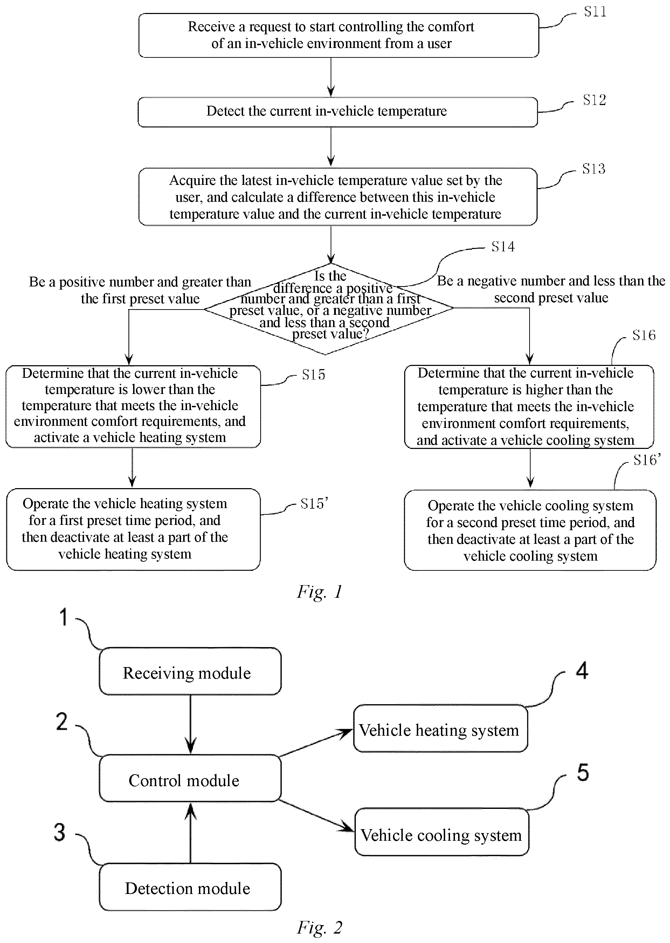

Reference is made to Fig. 1. A general flow of an embodiment of a method for controlling the comfort of an in-vehicle environment according to the invention is exemplarily provided in Fig. 1. As shown in Fig. 1, an example of the method for controlling the comfort of an in-vehicle environment comprises the following steps.

First, in step S11, a request to start controlling the comfort of the in-vehicle environment will be received, that is, in the invention, the comfort of the in-vehicle environment is controlled according to the user's request, which is usually sent by the user according to his/her own needs. If the user has no requirements for the control over the comfort of the in-vehicle environment, the method for controlling the comfort of the in-vehicle environment will not be executed. In the invention, a dedicated receiving module may be preferably provided inside the vehicle, such that the user can very conveniently perform one-button operation on the receiving module to send the above request to start controlling the comfort of the in-vehicle environment. As an example, such a receiving module may be separately provided on a control panel in a vehicle cabin, or integrated into an operation device or a function option in the control panel. The receiving module itself can take the form of a touch screen or any possible type of button device, for example. The user can directly click a start option on the touch screen or trigger such a button device, so that the above request to start controlling the comfort of the in-vehicle environment can be sent easily and quickly by means of a one-button operation.

Next, as shown in step S12, the current temperature of the in-vehicle environment is obtained through detection. For example, the current temperature of the in-vehicle environment may be obtained through detection performed by one or more temperature sensors provided at suitable locations in the vehicle. Of course, in some application scenarios, the current temperature of the in-vehicle environment may have been used by vehicle manufacturers, vehicle modification agencies, etc. as one of vehicle operating data that needs to be collected in real time, and the temperature data has been detected, sent to and stored in a vehicle control component (such as a central control unit (CCU), an electronic control unit (ECU), and a hybrid control unit (HCU)); therefore, the current temperature data of the in-vehicle environment can be obtained directly from the vehicle control component.

Subsequently, in step S13, the latest temperature value of the in-vehicle environment set by the user, i.e. the temperature value of the in-vehicle environment most recently set by the user, is acquired by querying historical storage data set by the user regarding the temperature of the in-vehicle environment, and a difference between this temperature value of the in-vehicle environment and the current temperature of the in-vehicle environment detected in step S 12 is then calculated. Due to various factors such as seasonal changes, the user's own physical condition, and the needs of other passengers, the user may often adjust the temperature of the in-vehicle environment when using the vehicle, so as to enable the temperature of the in-vehicle environment to reach an expected value by controlling an apparatus such as a vehicle air conditioner. The temperature data of the in-vehicle environment is generally stored as historical data in a storage device of the vehicle, and by querying the temperature data of the in-vehicle environment most recently set by the user therefrom and using same as a reference datum, the comfort of the in-vehicle environment can be controlled more accurately, so as to conform to the actual experience and real feelings of the user.

Then, in step S 14, determination is made on the difference between the temperature value of the in-vehicle environment obtained through querying and the current temperature of the in-vehicle environment obtained through detection, that is, determining whether the difference is a positive number and greater than a first preset value, or whether the difference is a negative number and less than a second preset value, so as to perform a corresponding control operation according to the determination result.

Specifically, it is shown in step S15 that if it is determined that the above difference is a positive number and greater than the first preset value, it is determined that the current temperature of the in-vehicle environment is low, that is, it is considered that the temperature of the in-vehicle environment at this time is lower than the temperature value that makes the in-vehicle environment reach a comfortable level. Therefore, the comfort of the in-vehicle environment needs to be controlled. In this case, the vehicle heating system can be activated to increase the temperature of the in-vehicle environment. As an example, for example, in optional step S15', the temperature of the in-vehicle environment may be increased by keeping the vehicle heating system operating for a first preset time period, and then deactivating a part or all of the vehicle heating system. This can be flexibly selected and set without departing from the spirit of the invention. For example, in an optional case, the vehicle air conditioner (such as a heating module, a blower, etc.) in the vehicle heating system that has been activated is not deactivated and continues to operate, such that the temperature of the in-vehicle environment is basically maintained at a stable temperature level. In addition, in an optional case, the detection, during heating by using the vehicle heating system, of whether the current temperature of the in-vehicle environment has reached or almost reached the latest temperature value of the in-vehicle environment set by the user or a preset temperature value may be used as the basis for determining whether to deactivate a part or all of the vehicle heating system. As mentioned above, by adopting the above measures, it is very convenient and intelligent to change the in-vehicle environment where the original temperature value may be very low or relatively low and the comfort is poor, so that the comfort of the in-vehicle environment can be significantly improved, thereby bringing the user a better comfort experience.

The vehicle heating system described above may comprise any components, modules, apparatuses or equipment provided in the vehicle that can be used to increase the temperature of the in-vehicle environment. By way of example, the vehicle heating system may comprise, but is not limited to, a heating module and a blower of a vehicle air conditioner, a seat heating module, a steering wheel heating module, etc. According to actual application requirements, the temperature of the in-vehicle environment can be optionally increased by activating one or more of the heating module and the blower of the vehicle air conditioner, the seat heating module, the steering wheel heating module, etc. in the vehicle heating system.

For example, in some cases, the heating module and the blower of the vehicle air conditioner in the vehicle heating system may be activated, such that the temperature of the in-vehicle environment as a whole can be increased relatively quickly. To meet different usage requirements, the heating module of the vehicle air conditioner is generally provided with a maximum power setting and a minimum power setting, or may be optionally further provided with one or more intermediate power settings between the above two settings. Similarly, the blower is also generally provided with a maximum air volume setting and a minimum air volume setting, or with a maximum air volume setting, a minimum air volume setting, and one or more intermediate air volume settings between the two. Therefore, in an optional case, in order to improve the comfort of the in-vehicle environment as quickly as possible in a shorter time period, the heating module and the blower of the vehicle air conditioner can respectively operate at the maximum power setting and the maximum air volume setting when they are respectively activated. Of course, without departing from the spirit of this application, the invention also allows the heating module and the blower of the vehicle air conditioner to respectively operate at a certain intermediate power setting and a certain intermediate air volume setting when they are respectively activated in some cases, thereby providing many more flexible applicable technical solutions.

As another example, when the seat heating module or the steering wheel heating module in the vehicle heating system is selected to be activated, the corresponding temperature of a seat or a steering wheel can be increased in a targeted manner, so that it is possible to very quickly and directly bring a comfortable experience to the user operating and using these vehicle components, and to quickly obtain a satisfactory feeling.

Another step S16 is also shown in Fig. 1: when it is determined that the difference between the temperature value of the in-vehicle environment obtained through querying and the current temperature of the in-vehicle environment obtained through detection is a negative number and less than the second preset value (which is a negative number), it can be determined that the current temperature of the in-vehicle environment is high, that is, it is considered that the temperature of the in-vehicle environment at this time is higher than the temperature value that makes the in-vehicle environment reach a comfortable level. Therefore, the comfort of the in-vehicle environment needs to be controlled. In this case, the vehicle cooling system can be activated to reduce the temperature of the in-vehicle environment. As an example, for example, in optional step S16', the temperature of the in-vehicle environment may be reduced by keeping the vehicle cooling system operating for a second preset time period, and then deactivating a part or all of the vehicle cooling system. This is allowed to be flexibly selected and set without departing from the spirit of the invention. For example, in an optional case, the vehicle air conditioner (such as a refrigeration module, the blower, etc.) in the vehicle cooling system that has been activated is not deactivated and continues to operate, such that the temperature of the in-vehicle environment is basically maintained at a stable temperature level. In addition, in an optional case, one can detect whether the current temperature of the in-vehicle environment during cooling using the vehicle cooling system has reached or almost reached the latest temperature value of the in-vehicle environment set by the user or a preset temperature value as the basis for determining whether to deactivate a part or all of the vehicle cooling system. As mentioned above, by adopting the above measures, it is very convenient and intelligent to change the in-vehicle environment where the original temperature value may be very high or relatively high and the comfort is poor, so that the comfort of the in-vehicle environment can be significantly improved, thereby bringing the user a better comfort experience.

The vehicle cooling system described above may comprise any components, modules, apparatuses or equipment provided in the vehicle that can be used to reduce the temperature of the in-vehicle environment. Specifically, the vehicle cooling system may comprise, for example, but not limited to, a refrigeration module and a blower of a vehicle air conditioner, a seat ventilation module, etc. According to actual application requirements, the temperature of the in-vehicle environment can be optionally increased by activating one or more of the refrigeration module and the blower of the vehicle air conditioner, the seat ventilation module, etc. in the vehicle cooling system.

As an example, in some application scenarios, the refrigeration module and the blower of the vehicle air conditioner in the vehicle cooling system may be activated, such that the temperature of the in-vehicle environment as a whole can be reduced relatively quickly. To meet different usage requirements, the refrigeration module of the vehicle air conditioner is generally provided with a maximum power setting and a minimum power setting, or may be optionally further provided with one or more intermediate power settings between the above two settings. Similarly, as described above, the blower is also generally provided with a maximum air volume setting, a minimum air volume setting, and one or more intermediate air volume settings possibly between them. Therefore, in an optional case, in order to reduce the comfort of the in-vehicle environment as quickly as possible in a shorter time period, the refrigeration module and the blower of the vehicle air conditioner can respectively operate at the maximum power setting and the maximum air volume setting when they are respectively activated. Moreover, without departing from the spirit of the invention, the refrigeration module and the blower of the vehicle air conditioner are also actually allowed to respectively operate at a certain intermediate power setting and a certain intermediate air volume setting when they are respectively activated, so that many more flexible applicable technical solutions can be provided.

As another example, in some application scenarios, one can choose to activate the seat ventilation module in the vehicle cooling system to reduce the corresponding temperature of the seat in a targeted manner, so that it is possible to very quickly and directly improve the user's riding comfort feeling, which helps the user to quickly obtain a satisfactory experience.

As an optional embodiment, when the heating module and the blower of the vehicle air conditioner are activated, or the refrigeration module and the blower of the vehicle air conditioner are activated, the air outlet mode of the vehicle air conditioner can also be selected and configured in a targeted manner to help the user to quickly obtain a good comfort experience, that is, air discharged from the air conditioner is delivered in the direction such that the somatosensory temperature of the user is changed. In this way, even if the temperature of the environment of the entire vehicle has not been effectively improved, the temperature of the local environment of the individual user can be quickly improved in a targeted manner, to allow the user to immediately obtain a comfortable body feeling. Since such a comfort control effect can be immediately perceived by the user, the actual application effect is very satisfactory. By way of example, the air outlet mode may comprise, but not limited to, a face blowing mode, a foot blowing mode, a face and foot blowing mode, etc.

Regarding the first preset value, the second preset value, the first preset time period, and the second preset time period mentioned above, without departing from the spirit of the invention, the above parameters are allowed to be flexibly adjusted according to actual application requirements. As an example only, the first preset value may be set to be any suitable temperature value such as 3°C, 5°C, 6°C, 8°C or 10°C, the second preset value may be set to be any suitable temperature value such as -3°C, -4°C, -6°C, -8°C, 9°C or -10°C, the first preset time period to be any suitable value such as 2 minutes, 3 minutes, 5 minutes, 6 minutes, 8 minutes, or 12 minutes, and the second preset time period to be any suitable value such as 2 minutes, 4 minutes, 5 minutes, 7 minutes, 8 minutes, or 10 minutes. It can be understood that the absolute value of the second preset value may be equal to or not equal to the absolute value of the first preset value, and the second preset time period may be also equal to or not equal to the first preset time period. That is, in the invention, the same or different control strategies are allowed for the respective activation and operating states of the vehicle heating system and the vehicle cooling system for controlling the comfort of the in-vehicle environment.

Reference is then made to Fig. 2. In this figure, the basic configuration of an embodiment of a system for controlling the comfort of an in-vehicle environment according to the invention is roughly illustrated only by way of example, which will be described in detail below.

In this embodiment, the system for controlling the comfort of an in-vehicle environment comprises a receiving module 1, a control module 2, and a detection module 3. The vehicle heating system 4 or the vehicle cooling system 5 can be controlled by the detection module 3 to achieve the corresponding control goal of the comfort of the in-vehicle environment.

Specifically, the receiving module 1 is configured for receiving a request that is sent by a user to start controlling the comfort of the in-vehicle environment. As mentioned before, such a request to start controlling the comfort of the in-vehicle environment is preferably sent out by means of a one-button control of the user. The receiving module 1 may be a touch screen or a button provided in the vehicle. This has been explained in detail above, so it will not be repeated here.

The detection module 3 is configured for detecting the current temperature of the in-vehicle environment. In an optional case, one or more temperature sensors and other devices may be very conveniently used to implement the function of the detection module 3.

The control module 2 is a control part in the system for controlling the comfort of the in-vehicle environment, and is connected to the receiving module 1 and the detection module 3, so as to perform the following steps after receiving the request to start controlling the comfort of the in-vehicle environment that is sent by the user via the receiving module 1 and the current temperature data of the in-vehicle environment detected by the detection module 3:
the control module 2 acquiring the latest temperature value of the in-vehicle environment set by the user by querying historical storage data set by the user regarding the temperature of the in-vehicle environment, and then calculating the difference between the temperature value of the in-vehicle environment and the current temperature of the in-vehicle environment obtained from the detection module 3;
then making a determination according to the difference and performing the following operation:
   if the difference is a positive number and is greater than a first preset value, determining that the current temperature of the in-vehicle environment is low and the comfort of the in-vehicle environment needs to be controlled, and thus activating a vehicle heating system 4 for increasing the temperature of the in-vehicle environment, thereby increasing the temperature of the in-vehicle environment; or
   if the difference is a negative number and is less than a second preset value, determining that the current temperature of the in-vehicle environment is high and needs to be controlled for the comfort of the in-vehicle environment, and thus activating a vehicle cooling system 5 for reducing the temperature of the in-vehicle environment, thereby reducing the temperature of the in-vehicle environment.

The control system 2 may optionally be further configured to perform the following steps: the vehicle heating system 4 operates for a first preset time period after the vehicle heating system 4 is activated, to increase the temperature of the in-vehicle environment, and a part or all of the vehicle heating system 4 is then deactivated; and/or the vehicle cooling system 5 operates for a second preset time period after the vehicle cooling system 5 is activated, to reduce the temperature of the in-vehicle environment, and a part or all of the vehicle cooling system 5 is then deactivated.

As an example, a central control unit (CCU) and the like may be used to intelligently implement the functions of the control module 2 discussed above, especially to enable it to automatically activate and control the operation of the corresponding vehicle heating system or refrigeration system according to the request to start controlling the comfort of the in-vehicle environment from the user, and then automatically deactivate these systems or some of their components, apparatuses or equipment, which can not only bring great convenience to the user, but can also improve the driving safety performance. Undoubtedly, the control module 2 is also allowed to be implemented by various means such as software, hardware, or a combination thereof without departing from the spirit of the invention.

In addition, it can be understood that since the technical contents directed to the vehicle heating system (such as the heating module and the blower of the vehicle air conditioner, the seat heating module, and the steering wheel heating module), the vehicle cooling system (such as the refrigeration module and the blower of the vehicle air conditioner, and the seat ventilation module), the first preset value, the second preset value, the first preset time period, the second preset time period, etc. have been described in great detail in the previous description of the method for controlling the comfort of the in-vehicle environment, the same or similar parts in the system for controlling the comfort of the in-vehicle environment can be directly referred to the specific description of the corresponding parts in the foregoing, which will not be fully described here. However, it should be pointed out that the above aspects can be flexibly selected and configured, so that more systems for controlling the comfort of an in-vehicle environment according to the invention can be provided to meet different actual application requirements.

In addition, according to yet another technical solution of the invention, there is also provided a vehicle provided with a system for controlling the comfort of an in-vehicle environment designed and provided according to the invention, so that compared with the prior art, the obvious technical advantages possessed by the solutions of the invention discussed above can be exerted. The vehicle provided according to the invention includes but is not limited to, for example, a battery electric vehicle, a hybrid vehicle, etc.

In addition, the invention also provides a controller comprising a processor and a memory, wherein the memory is used for storing instructions, and when the instructions are executed, the processor realizes the method for controlling the comfort of an in-vehicle environment according to the invention as exemplarily described above in conjunction with Fig. 1. In a specific embodiment, the controller may be provided in a vehicle or in other devices that can implement the method and the intention of the invention.

Finally, the invention also provides a storage medium for storing instructions that, when executed, are used to implement, for example, the method for controlling the comfort of an in-vehicle environment according to the invention as exemplarily described above in conjunction with Fig. 1.

The method for controlling the comfort of an in-vehicle environment, the system for controlling the comfort of an in-vehicle environment, the vehicle, the controller and the storage medium according to the invention are explained in detail above only by way of example, and these examples are merely used for describing the principles of the invention and the implementations thereof, rather than limiting the invention, and without departing from the spirit and scope of the invention, those skilled in the art may also make various variations and improvements. For example, it has been discussed in detail in the foregoing that the difference between the temperature value of the in-vehicle environment obtained through querying and the current temperature of the in-vehicle environment obtained through detection is compared with the first preset value or the second preset value and determination is made, a corresponding measure for controlling the comfort of the in-vehicle environment is then taken based on the determination result, and then when it is determined that the difference does not meet one of the aforementioned two control determination conditions (i.e., the difference is a positive number and greater than the first preset value, or is a negative number and less than the second preset value), it is considered that the comfort of the in-vehicle environment does not need to be controlled at this time, so that no comfort control measures need be taken. Therefore, all equivalent technical solutions should fall within the scope of the invention and be defined by the claims of the invention.

## Claims

1. A method for controlling the comfort of an in-vehicle environment, **characterized by** comprising:
receiving a request that is sent by a user to start controlling the comfort of an in-vehicle environment;
detecting the current temperature of the in-vehicle environment;
querying historical storage data set by the user regarding the temperature of the in-vehicle environment, so as to acquire the latest temperature value of the in-vehicle environment set by the user and calculate a difference between the latest temperature value and the detected current temperature of the in-vehicle environment; and
making a determination according to the difference and performing the following operation:
if the difference is a positive number and is greater than a first preset value, determining that the current temperature of the in-vehicle environment is low and the comfort of the in-vehicle environment needs to be controlled, and thus activating a vehicle heating system for increasing the temperature of the in-vehicle environment; or
if the difference is a negative number and is less than a second preset value, determining that the current temperature of the in-vehicle environment is high and needs to be controlled for the comfort of the in-vehicle environment, and thus activating a vehicle cooling system for reducing the temperature of the in-vehicle environment, wherein the second preset value is a negative number and the absolute value thereof is equal to or not equal to the absolute value of the first preset value.

2. The method for controlling the comfort of an in-vehicle environment according to claim 1, **characterized in that** the vehicle heating system operates for a first preset time period after being activated, to increase the temperature of the in-vehicle environment, and at least a part of the vehicle heating system is then deactivated; and/or
the vehicle cooling system operates for a second preset time period after being activated, to reduce the temperature of the in-vehicle environment, and at least a part of the vehicle cooling system is then deactivated, wherein the second preset time period is equal to or not equal to the first preset time period.

3. The method for controlling the comfort of an in-vehicle environment according to claim 1 or 2, **characterized in that** the vehicle heating system comprises a heating module and a blower of a vehicle air conditioner, a seat heating module, and a steering wheel heating module, and the temperature of the in-vehicle environment is increased by activating at least one of the heating module and the blower of the vehicle air conditioner, the seat heating module and the steering wheel heating module; and/or
the vehicle cooling system comprises a refrigeration module and the blower of the vehicle air conditioner, a seat ventilation module, and the temperature of the in-vehicle environment is reduced by activating at least one of the refrigeration module and the blower of the vehicle air conditioner, and the seat ventilation module.

4. The method for controlling the comfort of an in-vehicle environment according to claim 3, **characterized in that** the heating module of the vehicle air conditioner is provided with a maximum power setting and a minimum power setting, or with a maximum power setting, a minimum power setting and one or more intermediate power settings therebetween, the blower is provided with a maximum air volume setting and a minimum air volume setting, or with a maximum air volume setting, a minimum air volume setting and one or more intermediate air volume settings therebetween, the heating module of the vehicle air conditioner operates at the maximum power setting or at one of the intermediate power settings when being activated, and the blower operates at the maximum air volume setting or at one of the intermediate air volume settings when being activated; and/or
the refrigeration module of the vehicle air conditioner is provided with a maximum power setting and a minimum power setting, or with a maximum power setting, a minimum power setting and one or more intermediate power settings therebetween, the blower is provided with a maximum air volume setting and a minimum air volume setting, or with a maximum air volume setting, a minimum air volume setting and one or more intermediate air volume settings therebetween, the refrigeration module of the vehicle air conditioner operates at the maximum power setting or at one of the intermediate power settings when being activated, and the blower operates at the maximum air volume setting or at one of the intermediate air volume settings when being activated.

5. The method for controlling the comfort of an in-vehicle environment according to claim 3, **characterized in that** when the vehicle air conditioner is activated, an air outlet mode of the vehicle air conditioner is configured such that an air outlet of the air conditioner is directed in a direction such that the somatosensory temperature of the user is changed, and the air outlet mode comprises a face blowing mode, a foot blowing mode, and a face and foot blowing mode.

6. The method for controlling the comfort of an in-vehicle environment according to claim 1 or 2, **characterized in that** the user sends the request to start controlling the comfort of the in-vehicle environment by means of a one-button operation.

7. A system for controlling the comfort of an in-vehicle environment, **characterized by** comprising:
a receiving module for receiving a request that is sent by a user to start controlling the comfort of an in-vehicle environment;
a detection module for detecting the current temperature of the in-vehicle environment;
a control module, which is connected to the receiving module and the detection module, and is configured to perform the following steps:
querying historical storage data set by the user regarding the temperature of the in-vehicle environment after the request to start controlling the comfort of the in-vehicle environment is received from the receiving module, so as to acquire the latest temperature value of the in-vehicle environment set by the user and calculate a difference between the latest temperature value and the current temperature of the in-vehicle environment obtained from the detection module; and
making a determination according to the difference and performing the following operation:
if the difference is a positive number and is greater than a first preset value, determining that the current temperature of the in-vehicle environment is low and the comfort of the in-vehicle environment needs to be controlled, and thus activating a vehicle heating system for increasing the temperature of the in-vehicle environment; or
if the difference is a negative number and is less than a second preset value, determining that the current temperature of the in-vehicle environment is high and needs to be controlled for the comfort of the in-vehicle environment, and thus activating a vehicle cooling system for reducing the temperature of the in-vehicle environment, wherein the second preset value is a negative number and the absolute value thereof is equal to or not equal to the absolute value of the first preset value.

8. The system for controlling the comfort of an in-vehicle environment according to claim 7, **characterized in that** the control system is further configured to perform the following steps: the vehicle heating system operates for a first preset time period after being activated, to increase the temperature of the in-vehicle environment, and at least a part of the vehicle heating system is then deactivated; and/or
the vehicle cooling system operates for a second preset time period after being activated, to reduce the temperature of the in-vehicle environment, and at least a part of the vehicle cooling system is then deactivated, wherein the second preset time period is equal to or not equal to the first preset time period.

9. The system for controlling the comfort of an in-vehicle environment according to claim 7 or 8, **characterized in that** the vehicle heating system comprises a heating module and a blower of a vehicle air conditioner, a seat heating module, and a steering wheel heating module, and the control system is configured to increase the temperature of the in-vehicle environment by activating at least one of the heating module and the blower of the vehicle air conditioner, the seat heating module and the steering wheel heating module; and/or
the vehicle cooling system comprises a refrigeration module and the blower of the vehicle air conditioner, a seat ventilation module, and the control system is configured to reduce the temperature of the in-vehicle environment by activating at least one of the refrigeration module and the blower of the vehicle air conditioner, and the seat ventilation module.

10. The system for controlling the comfort of an in-vehicle environment according to claim 9, **characterized in that** the heating module of the vehicle air conditioner is provided with a maximum power setting and a minimum power setting, or with a maximum power setting, a minimum power setting and one or more intermediate power settings therebetween, the blower is provided with a maximum air volume setting and a minimum air volume setting, or with a maximum air volume setting, a minimum air volume setting and one or more intermediate air volume settings therebetween, and the control system is configured such that the heating module of the vehicle air conditioner operates at the maximum power setting or at one of the intermediate power settings when being activated, and that the blower operates at the maximum air volume setting or at one of the intermediate air volume settings when being activated; and/or
the refrigeration module of the vehicle air conditioner is provided with a maximum power setting and a minimum power setting, or with a maximum power setting, a minimum power setting and one or more intermediate power settings therebetween, the blower is provided with a maximum air volume setting and a minimum air volume setting, or with a maximum air volume setting, a minimum air volume setting and one or more intermediate air volume settings therebetween, and the control system is configured such that the refrigeration module of the vehicle air conditioner operates at the maximum power setting or at one of the intermediate power settings when being activated, and that the blower operates at the maximum air volume setting or at one of the intermediate air volume settings when being activated.

11. The system for controlling the comfort of an in-vehicle environment according to claim 9, **characterized in that** the control system is configured such that, when the vehicle air conditioner is activated, an air outlet mode of the vehicle air conditioner is configured such that an air outlet of the air conditioner is directed in a direction such that the somatosensory temperature of the user is changed, and the air outlet mode comprises a face blowing mode, a foot blowing mode, and a face and foot blowing mode.

12. The system for controlling the comfort of an in-vehicle environment according to claim 7 or 8, **characterized in that** the receiving module is provided in a vehicle for the user to send the request to start controlling the comfort of the in-vehicle environment by means of a one-button operation.

13. The system for controlling the comfort of an in-vehicle environment according to claim 7 or 8, **characterized in that** the control module is a central control unit (CCU), and the receiving module is a touch screen or a button.

14. A vehicle, **characterized in that** the vehicle is provided with a system for controlling the comfort of an in-vehicle environment according to any one of claims 7-13.

15. A controller comprising a processor and a memory for storing instructions, **characterized in that** when the instructions are executed, the processor implements a method for controlling the comfort of an in-vehicle environment according to any one of claims 1-6.

16. A storage medium for storing instructions, **characterized in that** the instructions, when being executed, implement a method for controlling the comfort of an in-vehicle environment according to any one of claims 1-6.
